# EUROPEAN PATENT APPLICATION

(11) **EP 3 944 119 A1**
(43) Date of publication of application: **26.01.2022**
(21) Application number: 19920008.0
(22) Date of filing: 29.10.2019
(51) Int. Cl.: G06F 30/12, G06F 30/27

(54) **DESIGN SUPPORT APPARATUS, DESIGN SUPPORT PROGRAM, AND DESIGN SUPPORT METHOD**

(30) Priority: 19.03.2019 JP 2019050826
(71) Applicant: Hitachi, Ltd., Tokyo 100-8280 (JP)
(72) Inventor: KATAYAMA, Erika, Tokyo 100-8280 (JP); ONODERA, Makoto, Tokyo 100-8280 (JP)
(74) Representative: MERH-IP Matias Erny Reichl Hoffmann Patentanwälte PartG mbB
(86) International application number: PCT/JP2019/042369
(87) International publication number: WO 2020/188869

(57) **Abstract**

To provide a technology that supports design by generating a validation procedure of design data from determination rules that should be observed as design guidelines. One of typical design support devices of the present invention includes: a determination rule definition unit that defines determination rule elements as design guidelines; a database unit that stores common functions that are elements of a procedure for validating design data (hereinafter referred to as a "validation procedure") in association with the determination rule elements; and a validation procedure generation unit that queries the database unit for the determination rule elements defined by the determination rule definition unit, combines the common functions that have been acquired, and generates the validation procedure.

## Description

### Technical Field

The present invention relates to a design support device, a design support program, and a design support method.

### Background Art

It is conventionally known to use a computer-aided design (CAD) system to design products and the like on a computer.

In this CAD design, it is preferable to take into consideration guidelines on, for example, ease of processing such as hole making and bending, and ease of assembly such as welding and screw fastening, which pose problems during manufacturing of a product.

Furthermore, in CAD design, it is desirable to take into consideration guidelines on, for example, ease of inspection and accessibility for jigs, which pose problems during product maintenance.

These design guidelines may include tens of thousands of rules for a single product. In addition, these design guidelines are usually defined by writing, drawings, and tables.

For example, a design guideline includes a rule such as "a hole diameter of Y or more is required for a stainless steel material of X mm in thickness" or "the part Pa and the part Pb should be spaced away from each other by a certain distance or more". Among these design guidelines, quantitative rules that can be checked by a CAD model as shown in the first example are called determination rules.

In order to validate these determination rules by using a CAD model, that is, CAD design data, it has been necessary to generate, one by one from scratch, a validation procedure constituted by a plurality of steps that can be executed in a program.

In a case of the example described above, "a hole diameter of Y or more is required for a stainless steel material of X mm in thickness" corresponds to a determination rule. It has been necessary to write down a shape recognition procedure for the CAD model one by one from the determination rule and create a validation procedure that can be used for checking in a program.

PTL 1 discloses a technology for "detecting a violation related to a mounting direction of a three-dimensional model and giving a notification".

In addition, PTL 2 discloses a technology for "automatically determining whether a design result of an automated design is good or not".

### Citation List

### Patent Literature

PTL 1: JP 2011-253269 A
PTL 2: JP 2005-309723 A

### Summary of Invention

### Technical Problem

In these PTLs 1 and 2, it is possible to automatically check whether a CAD model satisfies determination rules by generating a validation procedure in advance.

However, PTLs 1 and 2 do not specifically disclose a technology related to a process of generating the validation procedure from the determination rules.

In general, determination rules are often empirical knowledge accumulated on the basis of experiences and intuitions of designers, and it is a complicated and troublesome work to write down the determination rules in the form of a validation procedure that can be executed in a program.

It is therefore an object of the present invention to provide a technology for generating a validation procedure from determination rules.

### Solution to Problem

One of typical design support devices of the present invention includes: a determination rule definition unit that defines determination rule elements as design guidelines; a database unit that stores common functions that are elements of a procedure for validating design data (hereinafter referred to as a "validation procedure") in association with the determination rule elements; and a validation procedure generation unit that queries the database unit for the determination rule elements defined by the determination rule definition unit, combines the common functions that have been acquired, and generates the validation procedure.

### Advantageous Effects of Invention

According to the present invention, it is possible to generate a validation procedure from determination rules.

Problems, configurations, and effects other than those described above will become apparent from the following description of embodiments.

### Brief Description of Drawings

[FIG. 1] FIG. 1 is a block diagram illustrating a basic configuration of a design support device 10 in a first embodiment.
[FIG. 2] FIG. 2 is a diagram illustrating a state in which the design support device 10 is mounted on a computer.
[FIG. 3] FIG. 3 is a diagram illustrating a part of internal data in a database unit 105.
[FIG. 4] FIG. 4 is a flowchart illustrating an operation of the first embodiment.
[FIG. 5] FIG. 5 is a diagram illustrating a GUI screen provided to a user by a determination rule definition unit 104.
[FIG. 6] FIG. 6 is a block diagram illustrating a basic configuration of a design support device 10a in a second embodiment.
[FIG. 7] FIG. 7 is a diagram illustrating a CAD model 107.
[FIG. 8] FIG. 8 is a diagram illustrating generation of a validation procedure.
[FIG. 9] FIG. 9 is a diagram illustrating Proposal A of the validation procedure.
[FIG. 10] FIG. 10 is a diagram illustrating validation by Proposal A.
[FIG. 11] FIG. 11 is a diagram illustrating an example of a violation location being displayed.
[FIG. 12] FIG. 12 is a diagram illustrating Proposal B of the validation procedure.
[FIG. 13] FIG. 13 is a diagram illustrating validation by Proposal B.

### Description of Embodiments

Embodiments of the present invention will be described below with reference to the drawings.

### [First embodiment]

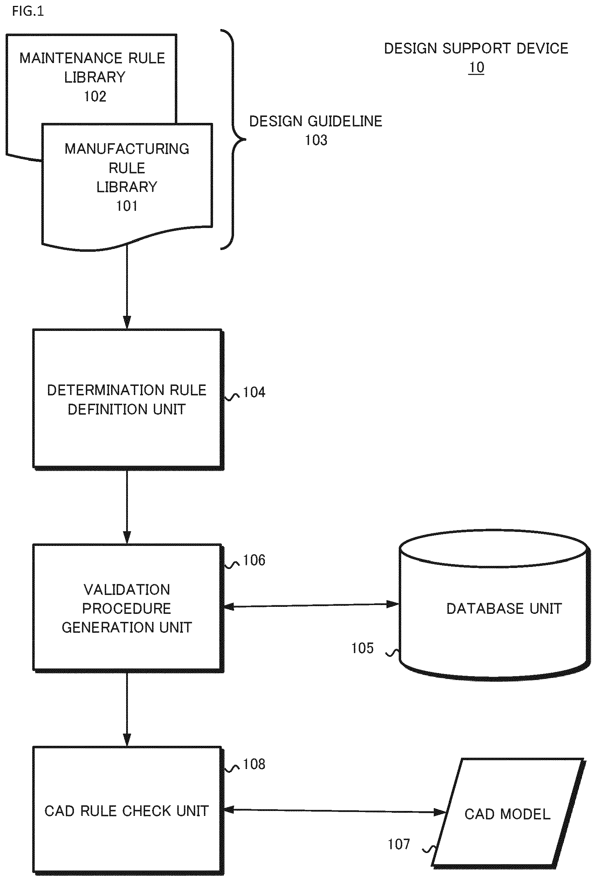

FIG. 1 is a block diagram illustrating a basic configuration of a design support device 10 in a first embodiment.

In the figure, the design support device 10 includes a design guideline 103, a determination rule definition unit 104, a database unit 105, a validation procedure generation unit 106, a CAD model 107, and a CAD rule check unit 108.

The design guideline 103 is a knowledge database where rules to be taken into consideration during designing are collected. The design guideline 103 includes, for example, a manufacturing rule library 101 and a maintenance rule library 102. The manufacturing rule library 101 is a collection of rules related to processing, assembly, and the like in a manufacturing process of a product. For example, the manufacturing rule library 101 contains rules related to processes such as hole making, bending, bolt fastening, and welding. On the other hand, the maintenance rule library 102 is a collection of rules such as accessibility for tools to a part to be inspected and ease of disassembly in a product maintenance process.

The determination rule definition unit 104 provides an interface for defining determination rule elements to be validated by using a CAD model. This interface includes a user interface for a user to define elements by referring to or importing rules in the design guideline 103, and an interface for automatically defining determination rule elements from the rules in the design guideline 103 on the basis of user inputs that have been accumulated in the past.

In the database unit 105, in accordance with an element of a determination rule or a combination of such elements, a group of procedure functions (hereinafter referred to as "common functions") that have been arranged as a basic part and that can be individually called by a computer are automatically or manually collected or created and then recorded as elements of a "procedure for validating a CAD model (hereinafter referred to as a "validation procedure")" generated in the past.

The validation procedure generation unit 106 queries the database unit 105 for determination rule elements defined by the determination rule definition unit 104, and combines common functions that are elements of a corresponding validation procedure to generate the validation procedure. In that case, provided that a similar determination rule that has existed in the past, a combination of common functions used in the validation procedure for the determination rule is automatically presented. On the other hand, in a case of a determination rule that has not existed so far, on the basis of the database unit 105, portions common to inputs in the past obtained by the determination rule definition unit 104 are combined, and a plurality of candidates for a new validation procedure is presented as proposals.

For example, the validation procedure generation unit 106 uses machine learning to generate a pattern similar to a validation procedure with a high validation result (that is, proven) in the past.

Furthermore, for example, the validation procedure generation unit 106 estimates, on the basis of machine learning of past validation results, validation results for proposed candidates for the validation procedure, and automatically selects and generates a proposed candidate for the validation procedure that is expected to yield high validation results.

Furthermore, for example, the validation procedure generation unit 106 uses a genetic algorithm to automatically select a combination of common functions in such a way to improve the validation results, and generates a validation procedure.

Proposed candidates for the validation procedure generated in this way are automatically presented, and a user can select a validation procedure from the candidates or partially modify the validation procedure.

The generated validation procedure is output to the CAD rule check unit 108 as a sequence in which a group of common functions that are elements of the validation procedure are read sequentially or by conditional branching.

The CAD rule check unit 108 executes, at any time, the sequence of the validation procedure for the CAD model 107 that is being designed or have been design by a user, automatically identifies a violation location that exists in the CAD model 107, and issues a warning by using highlighting or the like.

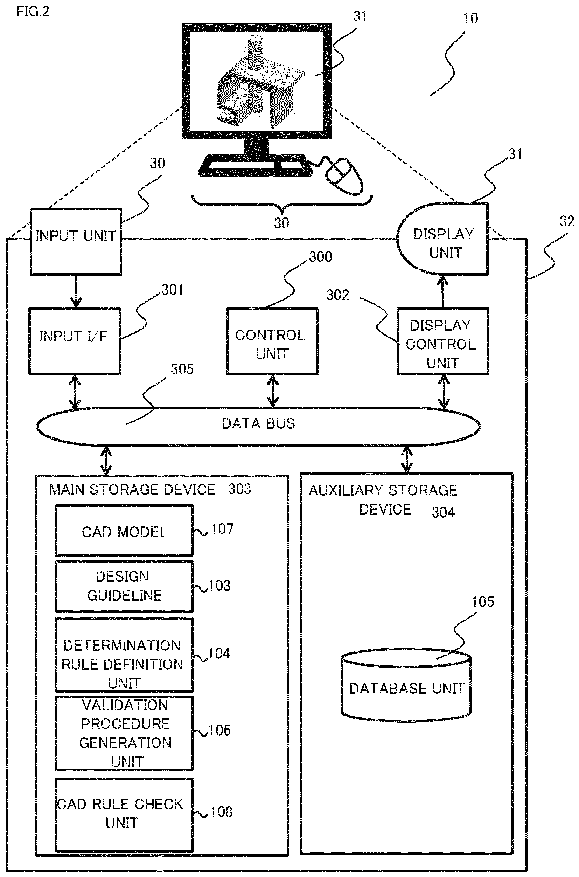

FIG. 2 is a diagram illustrating a state in which the design support device 10 is mounted on a computer.

In the figure, the design support device 10 is constituted by a processing unit 32, which is a computer including an input unit 30 and a display unit 31.

The input unit 30 and the display unit 31 provide a user with an operating environment using a graphic user interface (GUI).

The processing unit 32 includes a control unit 300, an input interface (hereinafter referred to as an "input I/F 301") for importing the CAD model 107 or a determination rule input from the input unit 30, a display control unit 302 that controls the display unit 31, a main storage device 303, and an auxiliary storage device 304 that are connected to each other via a data bus 305.

The main storage device 303 stores information (program) for causing the control unit 300 to function as the CAD model 107, the design guideline 103, the determination rule definition unit 104, the validation procedure generation unit 106, and the CAD rule check unit 108. The auxiliary storage device 304 stores data of the database unit 105 and a program.

A part or all of hardware of the processing unit 32 as a computer may be replaced with a digital signal processor (DSP), a field-programmable gate array (FPGA), a graphics processing unit (GPU), or the like. In addition, a part or all of the hardware may be arranged in a cloud server in a centralized manner, or cloud servers in a distributed manner, on a network, and then shared and used by a plurality of users via the network.

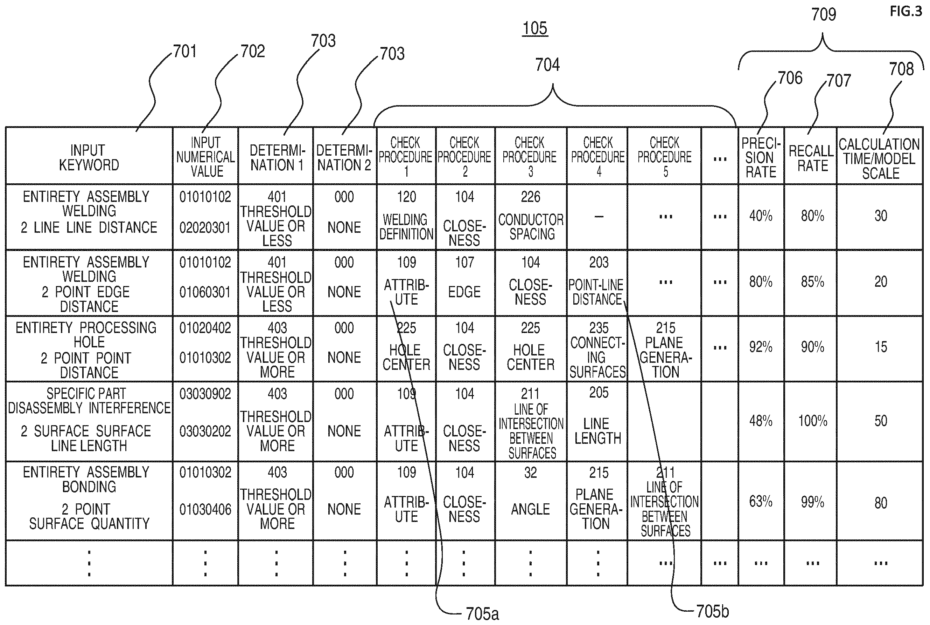

FIG. 3 is a diagram illustrating a part of internal data in the database unit 105.

In the figure, an input keyword 701 represents, as a keyword, one or a combination of a plurality of determination rule elements defined by the determination rule definition unit 104.

An input numerical value 702 is a numerical value indicating one or a combination of a plurality of determination rule elements. The database unit 105 can query for data when the input keyword 701 or the input numerical value 702 is input.

A determination method 703 is one or a plurality of pieces of condition data corresponding to a determination condition in a determination rule defined by the determination rule definition unit 104.

Sequences 704 of a validation procedure are constituted by sequences (execution data regarding a combination, conditional branching, or the like) in which a plurality of common functions is combined in a step-by-step manner.

Typical examples of the common functions include an attribute 705a for extracting a given attribute or part name, and a point-line distance 705b for measuring the distance from a point to a line. In addition, the numbers listed in a table of common functions are used as serial numbers for classification when machine learning is performed, and the numbers themselves have no meaning.

For the sequences 704 of the validation procedure that has been validated, an evaluation index group 709 is fed back from a CAD system, manufacturing equipment, a maintenance center, or the like. The evaluation index group 709 includes validation results such as a precision rate 706, a recall rate 707, and a calculation time/model scale 708.

Of these, the precision rate 706 is the ratio of the number of correct answers that have been returned for actual violations to the number of answers that have been returned for violations determined in the validation procedure, and is a validation result that indicates correctness of the validation (with less errors).

The recall rate 707 is the ratio of the number of items that have actually been detected to the number of items that should have been detected as violations, and is a validation result that indicates how very few omissions occur in the validation.

The calculation time/model scale 708 is a value obtained by normalizing a calculation time required to execute the validation procedure with the scale of the model to be validated, and is a validation result that indicates the weight of processing of the validation procedure.

In addition to those illustrated in FIG. 3, the database unit 105 also records an adoption rate of the validation procedure as a record of having been adopted and actually used in the past.

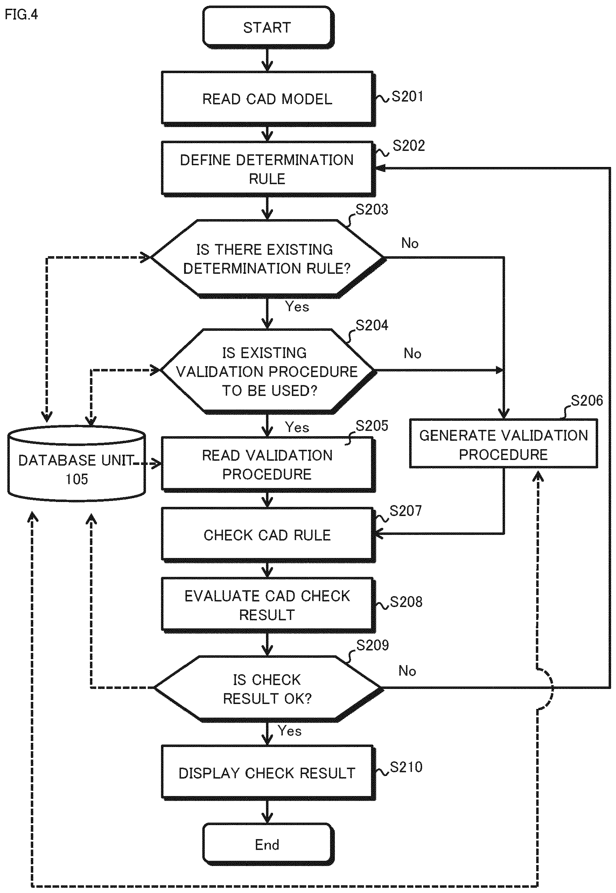

FIG. 4 is a flowchart illustrating an operation of the first embodiment.

A description will be given below in the order of the step numbers illustrated in FIG. 4 with reference to the device configurations in FIGS. 2 and 3.

Step S201: The processing unit 32 reads the CAD model 107 to be validated.

Step S202: The determination rule definition unit 104 acquires definitions of determination rule elements from a user.

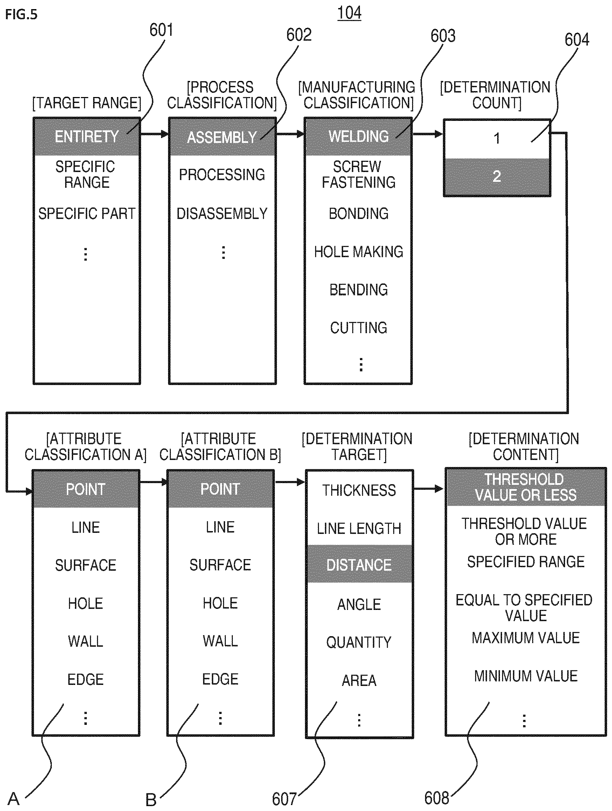

FIG. 5 is a diagram illustrating a GUI screen provided to the user by the determination rule definition unit 104.

In the figure, the determination rule definition unit 104 presents elements of a target range 601 (entirety, specific range, specific part, and the like) to the display unit 31 as options. The user considers the target range 601 on the basis of the determination rule to be defined, and inputs one of the options via the input unit 30. In FIG. 5, the user has selected the entirety of the model. In a case where a specific range has been selected, the range to be checked may be restricted in coordinates or the like. Furthermore, in a case where a specific part has been selected, an attribute defined in advance such as a welding point is selected. Alternatively, a shape similar to that of a certain part may be searched for and set as a check target.

In accordance with the element input for the target range 601, the determination rule definition unit 104 presents elements of a process classification 602 ("assembly" and "processing" in a manufacturing process, "disassembly" in a maintenance process, and the like) as options in a hierarchy one level down. The user considers the process classification 602 on the basis of the determination rule to be defined, and inputs one of the options via the input unit 30. In FIG. 5, the user selects "assembly" to define a determination rule for welding joint.

In accordance with the element input for the process classification 602, the determination rule definition unit 104 presents elements of a manufacturing classification 603 ("welding", "screw fastening", "bonding", "hole making", and the like) as options in a hierarchy one level down. The user considers the manufacturing classification 603 on the basis of the determination rule to be defined, and inputs one of the options via the input unit 30. In FIG. 5, the user selects "welding".

In accordance with the element input for the manufacturing classification 603, the determination rule definition unit 104 presents elements of a determination count 604 ("1", "2", and the like) as options in a hierarchy one level down. The user considers the determination count 604 on the basis of the determination rule to be defined, and inputs one of the options via the input unit 30. In FIG. 5, the user selects "2" because the comparison targets are two welding points.

In accordance with the number that has been input for the determination count 604, the determination rule definition unit 104 presents elements of a first attribute classification A ("point", "line", "surface", "hole", "wall", "edge", and the like) as options in a hierarchy one level down. The user considers the first attribute classification A on the basis of the determination rule to be defined, and inputs one of the options via the input unit 30. In FIG. 5, the user selects "point" because the first comparison target is a spot welding point.

In accordance with the number that has been input for the determination count 604, the determination rule definition unit 104 presents elements of a second attribute classification B ("point", "line", "surface", "hole", "wall", "edge", and the like) as options in a hierarchy one level down. The user considers the second attribute classification B on the basis of the determination rule to be defined, and inputs one of the options via the input unit 30. In FIG. 5, the user selects "point" because the second comparison target is a spot welding point.

In accordance with the elements that have been input for the attribute classifications A and B, the determination rule definition unit 104 presents elements of a determination target 607 ("thickness", "line length", "distance", "angle", "quantity", "area", and the like) as options in a hierarchy one level down. The user considers the determination target 607 on the basis of the determination rule to be defined, and inputs one of the options via the input unit 30. In FIG. 5, the user selects "distance" in order to validate the distance between the welding spots.

In accordance with the element input for the determination target 607, the determination rule definition unit 104 presents elements of a determination content 608 to be satisfied by a violation location ("threshold value or less", "threshold value or more", "specified range", "equal to specified value", "maximum value", "minimum value", and the like) as options in a hierarchy one level down. The user considers the determination content 608 on the basis of the determination rule to be defined, and inputs one of the options via the input unit 30. In FIG. 5, the user selects "threshold value or less" because the determination condition for a violation location is set to the welding spots being close to each other with the distance between them being equal to or less than a threshold value.

Those described above are defined by the user in the determination rule definition unit 104. The selection items described here are examples, and are not restrictive. In a case where an appropriate option does not exist, the selection item may be left unselected.

The determination rule definition unit 104 transmits, to the validation procedure generation unit 106, the determination rule elements defined in this way, one for each hierarchy level.

Step S203: The validation procedure generation unit 106 queries the database unit 105 for a group of determination rule elements, and determines whether the same determination rule has existed in the past. In a case where the same determination rule has already existed, the validation procedure generation unit 106 shifts the operation to step S204. In a case where the determination rule is a new one, the validation procedure generation unit 106 shifts the operation to step S206.

Step S204: The validation procedure generation unit 106 queries the database unit 105 for whether a validation procedure has been generated in the past for the existing determination rule. In a case where there is no existing validation procedure, the validation procedure generation unit 106 shifts the operation to step S206. In a case where there is an existing validation procedure, the validation procedure generation unit 106 acquires, from the database unit 105, past validation results (precision rate 706, recall rate 707, calculation time/model scale 708, and the like) fed back for the validation procedure. In a case where the validation results do not exceed predetermined acceptance criteria, the validation procedure generation unit 106 shifts the operation to step S206. In other cases, the validation procedure generation unit 106 determines that the existing validation procedure is to be adopted, and shifts the operation to step S205.

Step S205: The validation procedure generation unit 106 acquires, from the database unit 105, the validation procedure generated in the past for the existing determination rule, and adopts the validation procedure. In a case where there is a plurality of existing validation procedures, the validation procedure generation unit 106 may present proposed candidates for the validation procedure to the user in descending order of past validation results or adoption rate, and allow the user to select a detection procedure to be adopted. The validation procedure generation unit 106 transmits the adopted validation procedure to the CAD rule check unit 108. The CAD rule check unit 108 shifts the operation to step S207.

Step S206: The validation procedure generation unit 106 queries the database unit 105 for each of the determination rule elements defined in step S202, and acquires the corresponding common functions.

In general, a plurality of types of common functions is acquired for one element of a determination rule or a combination of such elements. Thus, in a case where a combination of common functions is created for the determination rule elements in a round-robin fashion, a large number of validation procedure sequences are generated.

The validation procedure generation unit 106 therefore uses machine learning to generate a pattern that is similar to a validation procedure with high validation results in the past. For example, the validation procedure generation unit 106 uses a genetic algorithm to automatically select a combination of common functions in such a way to improve the validation results, and generates a validation procedure.

Furthermore, for example, the validation procedure generation unit 106 estimates, on the basis of machine learning of past validation results or adoption rates, validation results or adoption rates for proposed candidates for the validation procedure, and automatically selects and generates a proposed candidate for the validation procedure that is estimated to yield high validation results or adoption rate. Alternatively, it is also possible to perform machine learning of an evaluation function synthesized from validation results and an adoption rate with a predetermined weight, and then automatically select and generate a proposed candidate for the validation procedure estimated to have a high evaluation function.

In a case where there is a plurality of proposed candidates for the validation procedure generated in this way, the proposed candidates for the validation procedure may be presented to the user in descending order of estimated validation results or adoption rate, and allow the user to select a detection procedure to be adopted.

The validation procedure generation unit 106 transmits the adopted validation procedure to the CAD rule check unit 108. The CAD rule check unit 108 shifts the operation to step S207.

Step S207: The CAD rule check unit 108 tries to validate the CAD model 107 according to the sequence of the validation procedure.

Step S208: The CAD rule check unit 108 evaluates the trial result of the validation procedure (violation locations, the number of detected violations, reason for the violations, and the like).

Here, the CAD rule check unit 108 may present the trial result of the validation procedure to the user, and ask the user whether the determination rule has been validated as desired, thereby collecting, from the user, a process of determination on whether the validation procedure is appropriate.

In addition, training data for machine learning may be created by collecting, as a record, a data set of the trial result of the validation procedure and results of the user's questionnaire and determination. A learning model in which machine learning has been performed with this training data is implemented in the CAD rule check unit 108 to allow the CAD rule check unit 108 to independently estimate whether a validation procedure is appropriate from a trial result of the validation procedure.

Step S209: In a case where the trial result of the validation procedure is inappropriate in step S208, the CAD rule check unit 108 returns the operation to step S202 and partially corrects or retries the definitions of the determination rule elements.

On the other hand, in a case where the trial result of the validation procedure is appropriate in step S208, the CAD rule check unit 108 shifts the operation to step S210.

Step S210: At any time in accordance with an update of the CAD model 107, the CAD rule check unit 108 validates the CAD model 107 according to the sequence of the validation procedure, and presents the validation result by using highlight display on the CAD model, a violation list, or the like.

The above series of processing is performed to complete the operation of generating the validation procedure.

### [Effects of first embodiment]

(1) In the first embodiment, the determination rule definition unit 104 accepts a user definition of a determination rule as a subdivided element, not as an empirical rule (natural language) itself. Therefore, the determination rule becomes less ambiguous, and generation of a validation procedure is further ensured.
(2) In the first embodiment, common functions that are elements of a validation procedure are stored in advance in the database unit 105 in association with a determination rule element or a combination of such elements. Determination rules lack generality and versatility in some cases, but determination rule elements and combinations thereof are subdivided as parts, and therefore have generality and versatility. This database unit 105 makes it possible to reuse common functions created and used in the past.
(3) In the first embodiment, the validation procedure generation unit 106 generates a validation procedure by combining, into a sequence, common functions corresponding to a determination rule element or a combination of such elements. It is therefore possible to automatically or semi-automatically generate a validation procedure.
(4) In the first embodiment, the determination rule definition unit 104 provides a user interface for structuring and classifying determination rule elements into a plurality of hierarchy levels, and defining the determination rule elements while moving through the hierarchy levels. In general, as for determination rule elements, the range of options of the subsequent elements is limited by determining one preceding element. It is therefore possible to define even a wide variety of complicated determination rules more efficiently and in a shorter time by sequentially moving through tree-structured elements classified into hierarchy levels.
(5) In the first embodiment, the determination rule definition unit 104 provides a user interface for defining the determination rule elements while moving through hierarchy levels at least including "target range (including "entirety" and "a part"), process classification (including "assembly" and "processing"), manufacturing classification (including "screw fastening"), determination count (including "1" and "2"), attribute classification (including "point" and "line"), determination target (including "length"), and determination condition (including "or more" and "or less") in this order". Moving through such a hierarchical structure makes it possible to define a determination rule related to manufacturing, maintenance, or the like of a CAD model as a collection of elements.
(6) In the first embodiment, the database unit 105 collects validation results fed back for the validation procedure in the past. On the other hand, the validation procedure generation unit 106 provides a user interface for selecting a validation procedure by reference to validation results in a case where there is a plurality of proposed candidates for the validation procedure. Therefore, a user can easily select a validation procedure that is estimated to yield high validation results.
(7) In the first embodiment, the validation procedure generation unit 106 uses a genetic algorithm or the like to combine common functions in such a way to improve the validation results, and generates a validation procedure. It is therefore possible to automatically or semi-automatically generate a validation procedure that is expected to yield high validation results.
(8) In the first embodiment, the validation procedure generation unit 106 may include a learning model in which machine learning has been performed in such a way to improve the validation results. The validation procedure generation unit 106 can generate a combination of common functions on the basis of this machine learning so that a validation procedure that is expected to yield high validation results can be automatically or semi-automatically generated.
(9) In the first embodiment, the validation procedure generation unit 106 provides a user interface for selecting, in a case where there is a plurality of candidates for the validation procedure, a validation procedure by reference to the adoption rates in the past. The user can therefore obtain a validation procedure that has been proven in the past (or a validation procedure that is similar to a proven validation procedure).
(10) In the first embodiment, there is a plurality of common functions for validating a CAD model by shape recognition. It is therefore possible to generate a validation procedure for performing shape recognition during manufacturing or maintenance with respect to a rule related to a shape to be observed at the time of design.
(11) Here, a comparison is made between a case where a user creates a validation procedure from scratch (that is, from a start step) and a case of the first embodiment. First, in the case where the user creates the validation procedure from scratch, there may be more than one combination of validation procedures. Furthermore, the user is required to have a large amount of prior knowledge such as knowledge on shape recognition in a CAD system, knowledge on materials, and knowledge on processing. Furthermore, the CAD model 107 in recent years tends to be sophisticated and complicated, and this results in an enormous amount of prior knowledge. Thus, for the user, creating the validation procedure from scratch is complicated and requires a large number of man-hours performed through trial and error. In addition, due to lack of an appropriate validation procedure, there has been a possibility that an omission occurs during a design check and is found as a problem at a manufacturing stage, resulting in a rework of the design.

However, in the first embodiment, due to the effects (1) to (10) described above, a validation procedure that is expected to yield high validation results can be automatically or semi-automatically generated. Thus, the problem described above can be improved.

### [Second embodiment]

In a second embodiment, an embodiment in which an additional function is added to the first embodiment will be described.

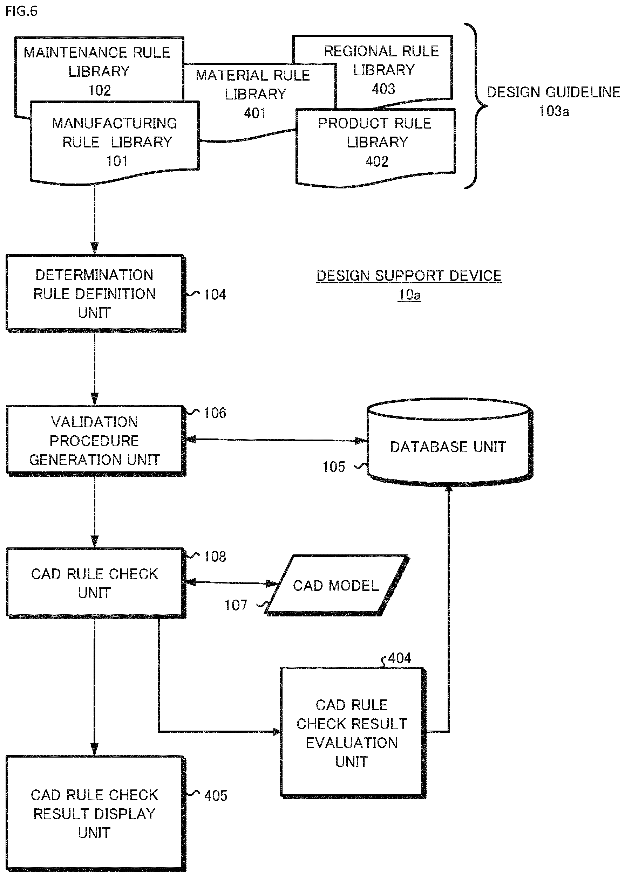

FIG. 6 is a block diagram illustrating a basic configuration of a design support device 10a in the second embodiment.

In the figure, the design support device 10a includes a design guideline 103a, a CAD rule check result evaluation unit 404, and a CAD rule check result display unit 405, in addition to the configuration of the first embodiment (FIG. 1). These additional components are implemented as a program in the main storage device 303 illustrated in FIG. 2.

The design guideline 103a includes a material rule library 401, a product rule library 402, and a regional rule library 403, in addition to a manufacturing rule library 101 and a maintenance rule library 102.

The material rule library 401 is a knowledge database that stores common rules related to differences in materials such as metal, sheet metal, and resin.

The product rule library 402 is a knowledge database that stores rules such as standards defined for each product or each product type.

The regional rule library 403 is a knowledge database that stores rules that must be observed in each country or region at the time of manufacturing, selling, using, importing, exporting, or the like.

These libraries are prepared in advance so that a user can easily define each element of a determination rule at the time of design and a threshold value for the determination by selecting the appropriate material, product, and region.

The operation itself of a determination rule definition unit 104, a database unit 105, a validation procedure generation unit 106, and a CAD rule check unit 108 is the same as the operation in the first embodiment, and the CAD rule check result evaluation unit 404 can be added here to clarify a feedback path in which a determination rule (input), a validation procedure (output), and a validation result (evaluation result) are associated with each other, and facilitate more flexible and detailed data update of the database unit 105.

This allows validation results to be used as an important criterion for estimation or determination when a validation procedure is selected. As a result, the validation results can be used as a criterion for selecting a validation procedure. Quantitative evaluation indexes such as a precision rate, a recall rate, and a calculation time/model scale are applied to the validation results here, but other indexes may be used as long as they are evaluation items of the validation procedure.

Furthermore, the CAD rule check unit 108 and the CAD rule check result display unit 405 apply, at any time in response to a design update, the sequence of the validation procedure to not only the design support device 10a but also a CAD model 107 of an external CAD system, and provide the CAD system with display information related to a violation location.

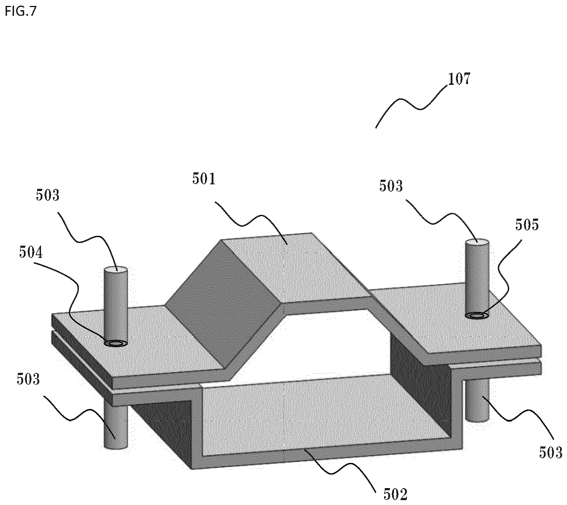

Next, in the second embodiment, for the CAD model 107 illustrated as an example in FIG. 7, examples of validation procedures (Proposal A and Proposal B) generated from a determination rule regarding a distance between spot welding points and processing of executing the validation procedures will be specifically described.

The CAD model 107 illustrated in FIG. 7 is a CAD model of a product (member) in which an upper sheet metal 501 and a lower sheet metal 502 are joined by spot welding. Here, spot welding is a method in which spot welding points 504 and 505 are pressurized by rod-shaped welding electrodes 503 from above and below, and an electric current is passed to cause joint surfaces to be melted and joined with the use of contact resistance heat and resistance heat of the material itself.

In such spot welding, in a case where the spot welding points 504 and 505 are close to each other, the welding current may be shunted, and this may result in improper joining of the surfaces to be joined, or distortion due to excessive thermal deformation. Thus, the spot welding points 504 and 505 need to be separated from each other by a predetermined distance or more, and it is necessary to validate the positional relationship between the welding points at a design stage.

Here, the spot welding point 504 is extracted as a first check target, and the distance to the spot welding point 505 in the vicinity thereof is validated.

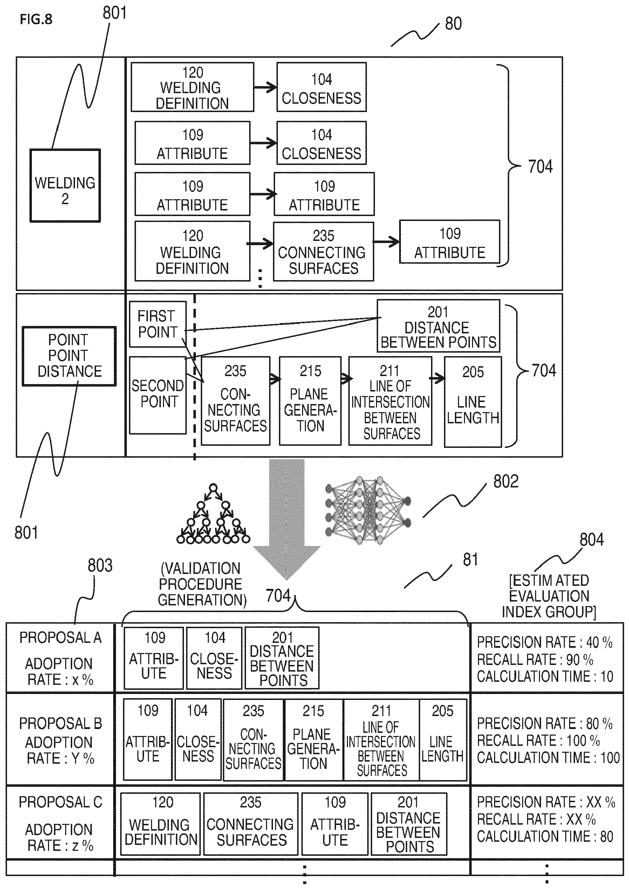

FIG. 8 is a diagram specifically illustrating a validation procedure generated by the validation procedure generation unit 106.

In the figure, the database unit 105 classifies elements of the determination rule (input keyword 701, input numerical value 702, and the like) obtained by a determination rule definition unit 104 into a module group 80 of related inputs.

The module group 80 stores combinations and orders of various common functions that are in the database unit 105.

For example, a combination of "welding" for a manufacturing classification 603 and "2" for a determination count 604 is stored as a minimum module 801 of the input keyword 701.

A combination of "point" for an attribute classification A, "point" for an attribute classification B, and "distance" between the two points is stored as a minimum module 801 of the input keyword 701.

In this way, sequences 704 of common functions of the validation procedure corresponding to the various minimum modules 801 are stored in the database unit 105.

The validation procedure generation unit 106 uses machine learning 802 such as a binary search tree, a deep neural network, or a genetic algorithm for determination rule elements or combinations thereof (input keyword 701 or the like) to derive and present a combination of common functions expected to yield high validation results or a combination of the sequences 704 of the common functions to a user as candidate validation procedures 81. Note that the candidate validation procedures 81 may be generated by a method other than machine learning.

These candidate validation procedures 81 are presented to a user as a proposed validation procedure list 803 illustrated in FIG. 8. In addition, as an estimated evaluation index group 804 in the database unit 105, estimated values based on evaluation results such as precision rates, recall rates, and calculation times that have been evaluated so far are presented to the user. Furthermore, in the proposed validation procedure list 803, adoption rates collected in the database unit 105 are also presented to the user.

The validation results and adoption rates here may be those collected for validation procedures in the past, or validation results and adoption rates estimated from similar validation procedures in the past may be used.

The user selects a validation procedure from the proposed validation procedure list 803 by reference to these validation results and adoption rates. The validation procedure selected by the user is transmitted to the CAD rule check unit 108.

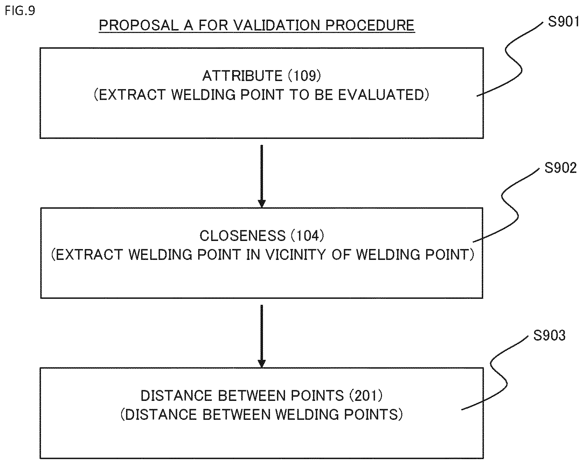

FIG. 9 is a diagram illustrating Proposal A of the validation procedure illustrated in FIG. 8.

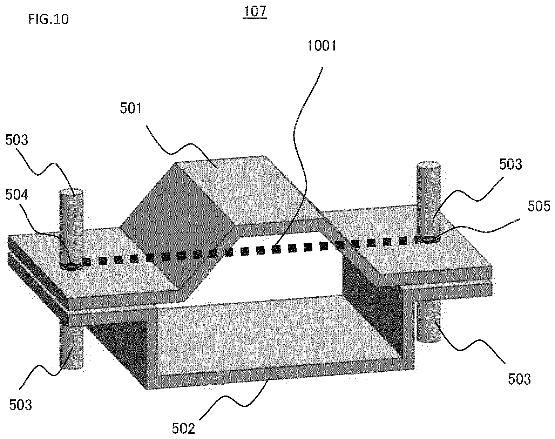

FIG. 10 is a diagram illustrating validation by Proposal A.

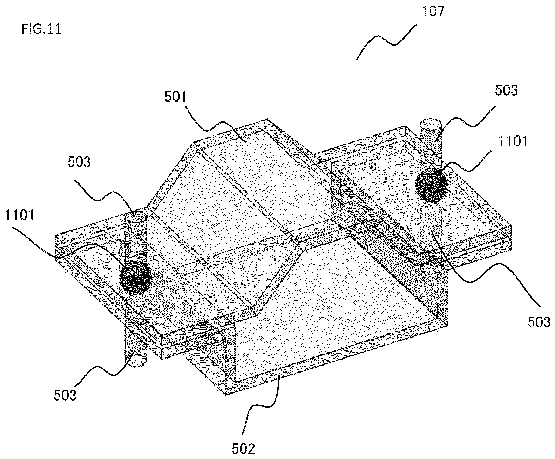

FIG. 11 is a diagram illustrating an example of a violation location being displayed.

Processing of validating Proposal A will be described below in the order of the step numbers illustrated in FIG. 9.

Step S901: Proposal A extracts the spot welding point 504 to be validated from attributes defined in advance as spot welding points in the CAD model 107.

Step S902: Proposal A extracts the spot welding point 505 located in the vicinity of the spot welding point 504.

Step S903: Proposal A calculates a linear distance between the spot welding points 504 and 505.

In Proposal A, in a case where the linear distance between the spot welding points 504 and 505 is equal to or less than a threshold value, the points are determined to be violation locations. The welding points are highlighted as violation locations 1101 illustrated in FIG. 11 as a warning to a user.

As illustrated in FIG. 10, the linear distance according to this Proposal A passes through a gap in the CAD model 107, and therefore does not match a path of a shunt current at the time of spot welding. Thus, in the validation by Proposal A, locations that are not violation locations are also extracted unnecessarily, and the precision rate decreases.

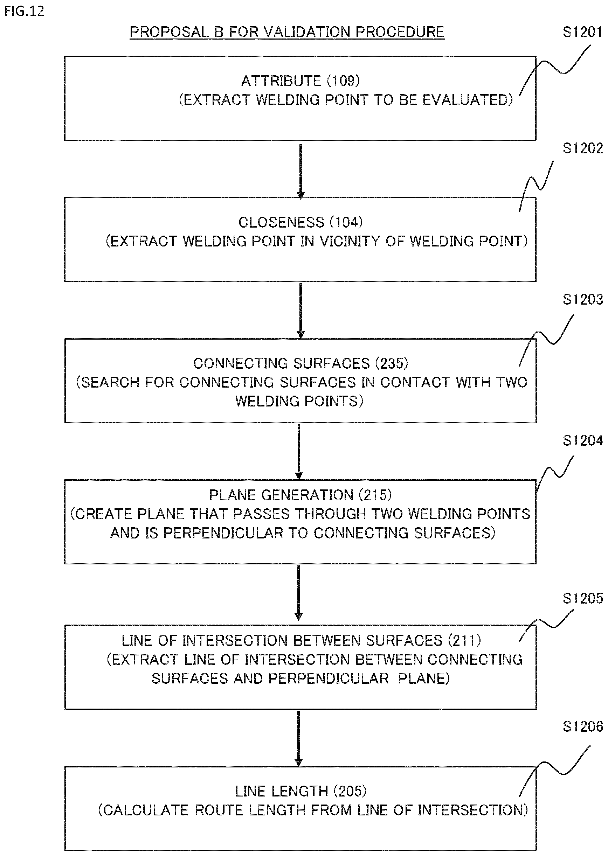

FIG. 12 is a diagram illustrating Proposal B of the validation procedure illustrated in FIG. 8.

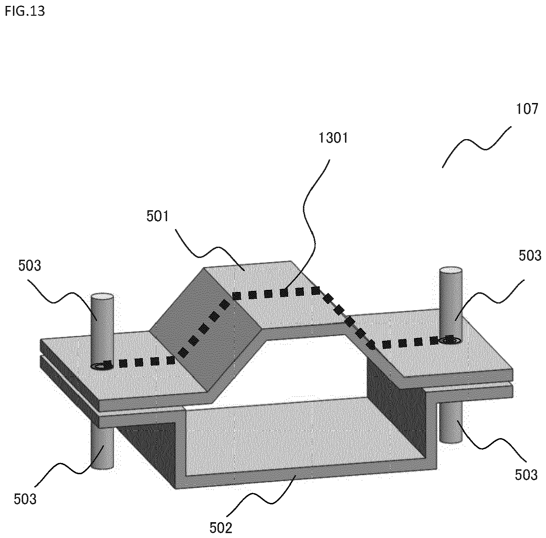

FIG. 13 is a diagram illustrating validation by Proposal B.

Processing of validating Proposal B will be described below in the order of the step numbers illustrated in FIG. 12.

Step S1201: Proposal B extracts the spot welding point 504 to be validated from attributes defined in advance as spot welding points in the CAD model 107.

Step S1202: Proposal B extracts the spot welding point 505 located in the vicinity of the spot welding point 504.

Step S1203: Proposal B extracts, from the CAD model 107, connecting surfaces of the sheet metals passing through both of the spot welding points 504 and 505.

Step S1204: Proposal B creates, in the CAD model 107, a plane that passes through the spot welding points 504 and 505 and intersects (e.g., perpendicular to) the connecting surfaces.

Step S1205: Proposal B creates paths of a shunt current at the time of spot welding formed between the spot welding points 504 and 505 by finding a line of intersection between the connecting surfaces and the plane.

Step S1206: Proposal B finds the shortest route length (dotted line 1301 on the upper sheet metal 501 illustrated in FIG. 13) among the created paths.

In Proposal B, in a case where the path length of the shunt current between the spot welding points 504 and 505 is equal to or less than a threshold value, the points can be determined to be violation locations.

By validating violation locations using the path length of the dotted line 1301 illustrated in FIG. 13 as the distance between spot points, it is possible to detect the violation locations related to the distance between spot points in consideration of an influence of the shunt current flowing through the sheet metals. As a result, the precision rate of Proposal B is higher than the precision rate of Proposal A, and the calculation time of Proposal B is longer than the calculation time of Proposal A.

The above allows, when a validation procedure is selected in the design support device of the present invention, a user to determine (or automatically in a case where the priority has been set in advance) whether to seek an improvement in accuracy of the check result or prioritize shortening of the calculation time, on the basis of the evaluation indexes of the CAD rule check result evaluation unit 404.

### [Effects of second embodiment]

The second embodiment has the following effects in addition to the effects of the first embodiment described above.
(1) In the second embodiment, a manufacturing rule library, a maintenance rule library, a material rule library, a product rule library, and a regional rule library are provided as design guidelines. By importing determination rule elements from at least one of these libraries, it becomes possible to more appropriately define determination rules, numerical conditions for determination, and the like.
(2) In the second embodiment, the CAD rule check result evaluation unit 404 reflects (feeds back) evaluation results of validation procedures in data update of the database unit at any time. Such feedback of evaluation results makes it possible to generate a validation procedure that can be expected to yield a higher validation result as time passes.

### [Supplementary notes on embodiments]

In the embodiments described above, a case has been described in which a genetic algorithm, a binary search tree, a deep neural network, or the like is used as machine learning. However, the present invention is not limited to this. For example, as machine learning, machine learning based on at least one of the following techniques may be adopted: convolutional neural network, decision tree learning, association rule learning, inductive logic programming, support vector machine, clustering, Bayesian network, reinforcement learning, feature learning, principal component analysis, extreme learning machine, and other learning techniques.

In addition, the present invention is not limited to the embodiments described above, but includes various modifications. For example, the first and second embodiments described above have been described in detail in order to describe the present invention in an easy-to-understand manner, and are not necessarily limited to those having all the configurations described.

In addition, it is possible to replace a part of the configuration of one embodiment with the configuration of another embodiment, and it is also possible to add the configuration of one embodiment to the configuration of another embodiment.

Furthermore, it is possible to add, delete, or replace a part of the configurations described above.

### Reference Signs List

- 10: design support device
- 10a: design support device
- 30: input unit
- 31: display unit
- 32: processing unit
- 80: module group
- 81: candidate validation procedure
- 101: manufacturing rule library
- 102: maintenance rule library
- 103: design guideline
- 103a: design guideline
- 104: determination rule definition unit
- 105: database unit
- 106: validation procedure generation unit
- 107: CAD model
- 108: CAD rule check unit
- 300: control unit
- 301: input I/F
- 302: display control unit
- 303: main storage device
- 304: auxiliary storage device
- 305: data bus
- 401: material rule library
- 402: product rule library
- 403: regional rule library
- 404: CAD rule check result evaluation unit
- 405: CAD rule check result display unit
- 501: upper sheet metal
- 502: lower sheet metal
- 503: welding electrode
- 504: spot welding point
- 505: spot welding point
- 601: target range
- 602: process classification
- 603: manufacturing classification
- 604: determination count
- 607: determination target
- 608: determination content
- 701: input keyword
- 702: input numerical value
- 703: determination method
- 704: sequences
- 706: precision rate
- 707: recall rate
- 708: calculation time/model scale
- 709: evaluation index group
- 801: minimum module
- 803: proposed validation procedure list
- 804: estimated evaluation index group
- 1101: violation location

## Claims

1. A design support device comprising:
a determination rule definition unit that defines determination rule elements as design guidelines;
a database unit that stores common functions that are elements of a procedure for validating design data (hereinafter referred to as a "validation procedure") in association with the determination rule elements; and
a validation procedure generation unit that queries the database unit for the determination rule elements defined by the determination rule definition unit, combines the common functions that have been acquired, and generates the validation procedure.

2. The design support device according to claim 1, wherein
the determination rule definition unit provides a user interface for structuring and classifying the determination rule elements into a plurality of hierarchy levels, and defining the determination rule elements while moving through the hierarchy levels.

3. The design support device according to any one of claims 1 and 2, wherein
the determination rule definition unit provides a user interface for defining the determination rule elements while moving through hierarchy levels at least including "target range (including "entirety" and "a part"), process classification (including "assembly" and "processing"), manufacturing classification (including "screw fastening"), determination count (including "1" and "2"), attribute classification (including "point" and "line"), determination target (including "length") and determination condition (including "or more" and "or less") in this order".

4. The design support device according to any one of claims 1 to 3, wherein
the database unit collects validation results fed back for the validation procedure in past, and
the validation procedure generation unit provides a user interface that presents, in a case where there is a plurality of candidates for the validation procedure, the validation results to allow the validation procedure to be selected by reference to the validation results.

5. The design support device according to any one of claims 1 to 4, wherein
the database unit collects validation results fed back for the validation procedure in past, and
the validation procedure generation unit combines the common functions in such a way to improve the validation results, and generates the validation procedure.

6. The design support device according to claim 5, wherein
the validation procedure generation unit performs machine learning in such a way to improve the validation results, combines the common functions on the basis of the machine learning, and generates the validation procedure.

7. The design support device according to any one of claims 1 to 6, wherein
the determination rule definition unit provides a user interface for importing the determination rule elements from at least one of a manufacturing rule library, a maintenance rule library, a material rule library, a product rule library, or a regional rule library, and allowing the determination rule elements that have been imported to be defined.

8. The design support device according to any one of claims 1 to 7, wherein
the database unit collects an adoption rate for the validation procedure in past, and
the validation procedure generation unit provides a user interface that presents, in a case where there is a plurality of candidates for the validation procedure, the adoption rates to allow the validation procedure to be selected by reference to the adoption rates.

9. The design support device according to any one of claims 1 to 8, wherein
the validation procedure is a shape recognition procedure for validating the design data by shape.

10. A design support program that causes a computer to function as
the determination rule definition unit, the database unit, and the validation procedure generation unit according to any one of claims 1 to 9.

11. A design support method comprising:
a determination rule definition step of defining determination rule elements as design guidelines;
a database step of storing, in a database unit, common functions that are elements of a procedure for validating design data (hereinafter referred to as a "validation procedure") in association with the determination rule elements; and
a validation procedure generation step of querying the database unit for the determination rule elements defined in the determination rule definition step, combining the common functions that have been acquired, and generating the validation procedure.
